(19) Europäisches Patentamt
European Patent Office
Office européen des brevets

(11) **EP 4 704 471 A1**

(12) **EUROPEAN PATENT APPLICATION**
published in accordance with Art. 153(4) EPC

(43) Date of publication:
**04.03.2026 Bulletin 2026/10**

(21) Application number: **24796300.2**

(22) Date of filing: **28.04.2024**

(51) International Patent Classification (IPC):
*H04W 52/02* (2009.01)

(52) Cooperative Patent Classification (CPC):
Y02D 30/70

(86) International application number:
**PCT/CN2024/090251**

(87) International publication number:
**WO 2024/222931 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.04.2023 CN 202310479714**

(71) Applicant: **Vivo Mobile Communication Co., Ltd.
Dongguan, Guangdong 523863 (CN)**

(72) Inventors:
• **HONG, Qi**
**Dongguan, Guangdong 523863 (CN)**
• **LI, Gen**
**Dongguan, Guangdong 523863 (CN)**
• **LI, Jianhui**
**Dongguan, Guangdong 523863 (CN)**

(74) Representative: **Shieldmark**
**P.O. Box 90471**
**2509 LL The Hague (NL)**

(54) **TRANSMISSION METHOD AND APPARATUS, AND TERMINAL AND NETWORK-SIDE DEVICE**

(57) This application discloses a transmission method and apparatus, a terminal, and a network side device, and pertains to the field of communication technologies. The transmission method in embodiments of this application includes: A terminal receives first information, where the first information is used to determine first WUS configuration information; and the terminal sends a WUS to a first network side device based on the first information.

A terminal receives first information, where the first information is used to determine first WUS configuration information — 301

The terminal sends a WUS to a first network side device based on the first information — 302

**FIG. 3**

**Description**

**CROSS-REFERENCE TO RELATED APPLICATIONS**

This application claims priority to Chinese Patent Application No. 202310479714.4, filed on April 27, 2023 in China, which is incorporated herein by reference in its entirety.

**TECHNICAL FIELD**

This application pertains to the field of communication technologies, and specifically relates to a transmission method and apparatus, a terminal, and a network side device.

**BACKGROUND**

With development of mobile communication technologies, to implement energy saving on a side of a network side device (for example, a base station), it is proposed that the network side device may also switches to an energy saving state, and the network side device in the energy saving state may send only some special synchronization signal blocks (Synchronization Signal Block, SSB), for example, a sparse (Sparse) SSB, a long-period SSB, or a light (Light) SSB, excluding a system information block 1 (System Information Block 1, SIB1), an SSB of a physical random access channel (Physical Random Access Channel, PRACH), and the like.

However, in a case that the network side device is in the energy saving state, there is no related solution to how to wake up the network side device to be in a non-energy saving state or a normal state. Consequently, it is easy to cause the network side device to stay in the energy saving state for a long time, affecting communication performance.

**SUMMARY**

Embodiments of this application provide a transmission method and apparatus, a terminal, and a network side device, so that a solution for waking up a network side device from being in an energy saving state to being in a non-energy saving state or a normal state can be provided, and the network side device can be prevented from staying in the energy saving state for a long time. This helps improve communication performance.

According to a first aspect, a transmission method is provided. The method includes:

a terminal receives first information, where the first information is used to determine first wake-up signal (Wake-up Signal, WUS) configuration information; and
the terminal sends a WUS to a first network side device based on the first information.

According to a second aspect, a transmission apparatus is provided. The apparatus includes:

a first receiving module, configured to receive first information, where the first information is used to determine first wake-up signal WUS configuration information; and
a first sending module, configured to send a WUS to a first network side device based on the first information.

According to a third aspect, a transmission method is provided. The method includes:
a second network side device sends first information, where the first information is used to determine first wake-up signal WUS configuration information.

According to a fourth aspect, a transmission apparatus is provided. The apparatus includes:
a second sending module, configured to send first information, where the first information is used to determine first wake-up signal WUS configuration information.

According to a fifth aspect, a transmission method is provided. The method includes:

a first network side device receives a wake-up signal WUS from a terminal; and
the first network side device switches from being in an energy saving state to being in a non-energy saving state based on the WUS.

According to a sixth aspect, a transmission apparatus is provided. The apparatus includes:

a second receiving module, configured to receive a wake-up signal WUS from a terminal; and
a switching module, configured to switch from being in an energy saving state to being in a non-energy saving state based on the WUS.

According to a seventh aspect, a terminal is provided. The terminal includes a processor and a memory, and the memory stores a program or an instruction that is executable on the processor; and when the program or the instruction is executed by the processor, the steps of the method according to the first aspect are implemented.

According to an eighth aspect, a terminal is provided. The terminal includes a processor and a communication interface. The communication interface is configured to: receive first information, where the first information is used to determine first wake-up signal WUS configuration information; and send a WUS to a first network side device based on the first information.

According to a ninth aspect, a network side device is provided. The network side device includes a processor and a memory, and the memory stores a program or an instruction that is executable on the processor; and when the program or the instruction is executed by the processor, the steps of the method according to the fifth aspect are implemented.

According to a tenth aspect, a network side device is provided. The network side device includes a processor and a communication interface. The communication interface is configured to send first information, where the first information is used to determine first wake-up signal WUS configuration information.

According to an eleventh aspect, a network side device is provided. The network side device includes a processor and a memory, and the memory stores a program or an instruction that is executable on the processor; and when the program or the instruction is executed by the processor, the steps of the method according to the third aspect are implemented.

According to a twelfth aspect, a network side device is provided. The network side device includes a processor and a communication interface. The communication interface is configured to receive a wake-up signal WUS from a terminal; and the processor is configured to switch from being in an energy saving state to being in a non-energy saving state based on the WUS.

According to a thirteenth aspect, a transmission system is provided. The transmission system includes: a terminal and a network side device. The terminal may be configured to perform the steps of the transmission method according to the first aspect, and the network side device may be configured to perform the steps of the transmission method according to the third aspect, or the network side device may be configured to perform the steps of the transmission method according to the fifth aspect.

According to a fourteenth aspect, a readable storage medium is provided. The readable storage medium stores a program or an instruction; and when the program or the instruction is executed by a processor, the steps of the method according to the first aspect are implemented, or the steps of the method according to the third aspect are implemented, or the steps of the method according to the fifth aspect are implemented.

According to a fifteenth aspect, a chip is provided. The chip includes a processor and a communication interface, the communication interface is coupled to the processor, and the processor is configured to run a program or an instruction, to implement the steps of the method according to the first aspect, or implement the steps of the method according to the third aspect, or implement the steps of the method according to the fifth aspect.

According to a sixteenth aspect, a computer program/program product is provided. The computer program/program product is stored in a storage medium, and the computer program/program product is executed by at least one processor, to implement the steps of the method according to the first aspect, or implement the steps of the method according to the third aspect, or implement the steps of the method according to the fifth aspect.

In the embodiments of this application, the terminal receives the first information, where the first information is used to determine the first WUS configuration information; and the terminal sends the WUS to the first network side device based on the first information, so that the network side device in the energy saving state can be woken up by the terminal, and the network side device can be prevented from staying in the energy saving state for a long time. This helps improve communication performance.

## BRIEF DESCRIPTION OF DRAWINGS

FIG. 1 is a block diagram of a wireless communication system to which embodiments of this application are applicable;
FIG. 2 is a schematic diagram of bits included in a PBCH according to an embodiment of this application;
FIG. 3 is a flowchart of a transmission method according to an embodiment of this application;
FIG. 4 is a flowchart of another transmission method according to an embodiment of this application;
FIG. 5 is a flowchart of still another transmission method according to an embodiment of this application;
FIG. 6 is a diagram of a structure of a transmission apparatus according to an embodiment of this application;
FIG. 7 is a diagram of a structure of another transmission apparatus according to an embodiment of this application;
FIG. 8 is a diagram of a structure of still another transmission apparatus according to an embodiment of this application;

FIG. 9 is a diagram of a structure of a communication device according to an embodiment of this application;

FIG. 10 is a diagram of a structure of a terminal according to an embodiment of this application; and

FIG. 11 is a diagram of a structure of a network side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this application are used to distinguish between similar objects, instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, "or" in this application represents at least one of connected objects. For example, "A or B" covers three solutions. To be specific, in a solution 1, A is included but B is not included; in a solution 2, B is included but A is not included; and in a solution 3, both A and B are included. The character "/" usually indicates an "or" relationship between associated objects.

The term "indication" in this application may be either a direct indication (or an explicit indication) or an indirect indication (or an implicit indication). The direct indication may be understood as that a sender explicitly notifies a receiver of content such as specific information, an operation that needs to be performed, or a request result in a sent indication. The indirect indication may be understood as that the receiver determines corresponding information based on an indication sent by the sender, or performs determining and determines an operation that needs to be performed, a request result, or the like based on a determining result.

It should be noted that the technologies described in the embodiments of this application are not limited to a long term evolution (Long Term Evolution, LTE)/LTE-advanced (LTE-Advanced, LTE-A) system, and may also be used in other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. The terms "system" and "network" in the embodiments of this application may be used interchangeably. The technologies described can be applied to both the systems and the radio technologies mentioned above as well as to other systems and radio technologies. A new radio (New Radio, NR) system is described in the following descriptions for illustrative purposes, and the NR terminology is used in most of the following descriptions, although these technologies can also be applied to a system other than the NR system, for example, a 6th generation (6th Generation, 6G) communication system.

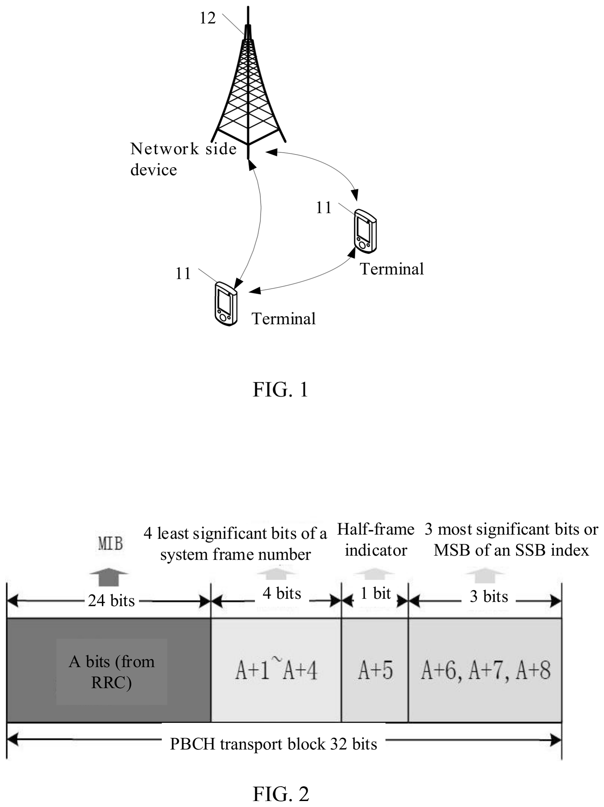

FIG. 1 is a block diagram of a wireless communication system to which the embodiments of this application may be applied. The wireless communication system includes a terminal 11 and a network side device 12. The terminal 11 may be a terminal side device, for example, a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), maritime user equipment, pedestrian user equipment (Pedestrian User Equipment, PUE), a smart home (a home device having a wireless communication function, for example, a refrigerator, a television, a washing machine, or furniture), a game console, a personal computer (Personal Computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart anklet chain, and the like), a smart wrist strap, smart clothes, and the like. A vehicle-mounted device may also be referred to as a vehicle-mounted terminal, a vehicle-mounted controller, a vehicle-mounted module, a vehicle-mounted component, a vehicle-mounted chip, or a vehicle-mounted unit. It should be noted that a specific type of the terminal 11 is not limited in the embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (Evolved NodeB, eNB), a next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the field. Provided that same technical effect is achieved, the base station is not limited to a specified technical term. It should be noted that in the embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), an application function (Application Function, AF), and the like. It should be noted that, in the embodiments of this application, only a core network device in an NR system is used as an example for description, and a specific type of the core network device is not limited.

For ease of understanding, some content involved in the embodiments of this application is described below.

1. SSB/Physical broadcast channel (Physical Broadcast Channel, PBCH).

An internal structure of the SSB is protocol-standardized. Therefore, after finding a synchronization signal on a specific synchronization frequency, UE may attempt to decode the SSB. Most important information included in the SSB is a master information block (Master Information Block, MIB). The MIB may include the following content:

a system frame number (systemFrameNumber IE): where a complete frame number requires 10 bits (bit), a frame number in a MIB payload (Payload) has only 6 most significant bits, and 4 least significant bits are transmitted in a non-MIB bit in a PBCH transport block;
a subcarrier spacing (subCarrierSpacingCommon IE): where a subcarrier spacing of a downlink signal in an initial access procedure indicates a subcarrier spacing of a SIB1/OSI/initially-accessed Msg2/Msg4/paging message;
a SSB-subcarrier offset information element (ssb-SubcarrierOffset IE): is quantity of subcarrier spacings between a lowest subcarrier of the SSB and a nearest physical resource block (Physical Resource Block, PRB);
a demodulation reference signal (Demodulation Reference Signal, DMRS) type A position information element (dmrs-Type A-Position IE): is a configuration of a physical downlink shared channel (Physical Downlink Shared Channel, PDSCH) DMRS reference signal;
a configuration information element of a physical downlink control channel (Physical Downlink Control Channel, PDCCH) (pdcch-ConfigSIB 1 IE) of a SIB 1: includes a control resource set (Control Resource Set, CORESET) (similar to an LTE control format indicator (Control Format Indicator, CFI)) and a search space configuration;
an access control parameter of a cell barred information element (cellBarred IE): is a radio resource control (Radio Resource Control, RRC), which identifies whether a cell is barred;
an intra-frequency reselection information element (intraFreqReselection IE): is an RRC access control parameter, which identifies whether intra-frequency reselection is allowed in a cell; and
reserved (spare): indicates a reserved bit (bit).

In addition to MIB information, the PBCH further includes some other information, as shown in FIG. 2.

A+1 to A+4: 4-bit frame number information is added; and after 4 least significant bits of a system frame number are obtained, the 10-bit frame number information is integrally obtained based on 6-bit information of systemFrameNumber in a previous MIB.

A+5: A half-frame information bit is added, where the bit indicates whether a frame is a first half-frame or a second half-frame.

A+6 to A+8: If a maximum SSB index (SSB Index) L = 64 (F > 6 GHz), A+6 to A+8 indicate 3 most significant bits of the SSB index (three least significant bits of the SSB index are carried by a PBCH DMRS); otherwise, A+6 indicates 1 most significant bit of Kssb, and A+7/A+8 indicates a reserved bit.

2: Cell-defining SSB (Cell-defining SSB, CD-SSB) and non-cell-defining SSB (non-Cell-defining SSB, NCD-SSB).

In an NR system, the CD-SSB is defined as an SSB associated with a SIB1 (namely, remaining minimum system information (Remaining Minimum System Information, RMSI). The SIB1 defines scheduling information of another SIB and includes information used for initial access of a terminal. A frequency position of the CD-SSB needs to be in a system synchronization raster.

The NCD-SSB is correspondingly defined as an SSB not associated with the SIB1. The NCD-SSB may be used for secondary cell synchronization, or may be used as a measurement signal configured for the terminal. The NCD-SSB is not necessarily located on the system synchronization raster. If the NCD-SSB is located on the system synchronization raster, the NCD-SSB may indicate a global synchronization channel number (Global Synchronization Channel Number, GSCN) of the CD-SSB by using information carried in the NCD-SSB.

Data of a PBCH channel is 32 bits in total, where bits 0 to 23 are from an RRC layer, and bits 24 to 31 are from a physical layer (Physical Layer, PHY layer).

The RRC layer carries a MIB, where PDCCH-ConfigSIB1 carries information about a CORESET #0 and search space 0 (search space 0).

The information carried at the PHY layer includes:

4 least significant bits of a system frame number, namely, 4 bits;
a 5-ms half-frame number, namely, 1 bit;
a beam identifier, or the most significant bit (1 bit) of $K_{SSB}$ + a beam identifier (2 bits), namely, 3 bits; and
$k_{SSB}$: a subcarrier offset information field (ssb-SubcarrierOffset) of an SSB is used to indicate a value $k_{SSB}$ of the subcarrier offset between the SSB and the CORESET #0. An offset range includes 0 to 23 subcarriers and 0 to 11 subcarriers, which are respectively indicated by using 5 bits (4 bits are indicated by the ssb-SubcarrierOffset, and the 1 most significant bit is indicated by the PBCH PHY layer) and 4 bits, and respectively correspond frequency ranges FR1 and FR2. When kSSB > 23 (FR1) or kSSB > 11 (FR2), the value range is used to indicate that the current SSB is not associated with the SIB1, but some values may be used to indicate the GSCN of the CD-SSB, as shown in Table 1 and Table 2. Table 1 corresponds to the frequency range 1 (Frequency Range 1, FR1), and Table 2 corresponds to the frequency range 2 (Frequency Range 2, FR2).

When a value of $k_{SSB}$ = 31 (FR1) or kSSB = 15 (FR2), the UE considers that the CD-SSB does not exist within a specific GSFN range.

**Table 1**

| $k_{SSB}$ | 16 * control resource set 0 + search space 0 | $N_{GSCN}^{offset}$ |
|---|---|---|
| 24 | 0, 1, ..., 255 | 1, 2, ..., 256 |
| 25 | 0, 1, ..., 255 | 257, 258, ..., 512 |
| 26 | 0, 1, ..., 255 | 513, 514, ..., 768 |
| 27 | 0, 1, ..., 255 | -1, -2, ..., -256 |
| 28 | 0, 1, ..., 255 | -257, -258, ..., -512 |
| 29 | 0, 1, ..., 255 | -513, -514, ..., -768 |
| 30 | 0, 1, ..., 255 | Reserved |

**Table 2**

| $k_{SSB}$ | 16 * control resource set 0 + search space 0 | $N_{GSCN}^{offset}$ |
|---|---|---|
| 12 | 0, 1, ..., 255 | 1, 2, ..., 256 |
| 13 | 0, 1, ..., 255 | -1, -2, ..., -256 |
| 14 | 0, 1, ..., 255 | Reserved |

3. Cell search.

Initial search is required when the UE is powered on or during cell handover. The purpose is to obtain cell downlink synchronization: (1) time synchronization detection (detect a synchronization signal position, a cyclic prefix (Cyclic Prefix, CP) type, a cell ID, and the like); and (2) frequency synchronization detection (perform frequency offset estimation by using signals such as a primary synchronization signal (Primary Synchronization Signal, PSS) and a secondary synchronization signal (Secondary Synchronization Signal, SSS), and then correct the frequency offset). Certainly, a main function of the initial search is to find an available network, that is, the UE performs blind search on an entire network frequency band based on a working frequency band supported by the UE and a protocol-specified GSCN.

The UE can find a cell only when the UE enters a coverage area of the cell. The UE not only needs to search for a cell during power-on. To support mobility, the UE continuously searches for a cell (measures an SSB), obtains synchronization, and estimates received quality of the cell. Therefore, whether to perform handover (handover) (the UE is in an RRC_connected state) or cell reselection (cell re_selection) (cell re_selection) (the UE is in an RRC idle (RRC_IDLE) state) or in an RRC inactive (RRC_INACTIVE) state).

A total of 1008 different physical cell identifiers (Physical Cell Identifier, PCI) $N_{ID}^{cell}$ are defined in NR.

$$N_{ID}^{cell} = 3\,N_{ID}^{(1)} + N_{ID}^{(2)}$$ where $N_{ID}^{(2)}$ corresponding to the PSS are three candidate m-sequences, and carry some cell ID information; and $N_{ID}^{(1)}$ corresponding to the SSS are 336 candidate m-sequences, and carry some cell ID information.

4. Synchronization raster.

When the UE performs cell search when the UE is powered on, the UE detects an SSB signal only based on an operator and a frequency band supported by the UE, and performs downlink time-frequency synchronization. A granularity of a global frequency raster is small. As a result, a value range of an NR absolute radio-frequency channel number (Absolute Radio-Frequency Channel Number, ARFCN) is large. If blind detection is directly performed based on the global frequency raster, a synchronization delay is long. To effectively reduce the synchronization delay in this process, a concept of a synchronization raster (Synchronization Raster) is specifically defined in the 3rd generation partnership project (3rd Generation Partnership Project, 3GPP), and a GSCN is used to limit the search range. As shown in Table 3, in a range of 0 to 3000 MHz, the synchronization raster is 1200 kHz; in a range of 3000 to 24250 MHz, the synchronization raster is 1.44 MHz; and in a range of 24250 MHz to 100000 MHz, the synchronization raster is 17.28 MHz. Similar to an NR-ARFCN, the GSCN defines a frequency band ranging from 0 to 100 GHz. Each GSCN corresponds to an SSB detection frequency.

**Table 3**

| Frequency range | SSB frequency position SS$_{REF}$ | GSCN | GSCN range |
|---|---|---|---|
| 0 to 3000 MHz | N * 1200 kHz + M * 50 kHz, N = 1:2499, M $\varepsilon$ {1, 3, 5} (Note) | 3N + (M-3)/2 | 2 to 7498 |
| 3000 to 24250 MHz | 3000 MHz + N * 1.44 MHz, N = 0:14756 | 7499 + N | 7499 to 22255 |
| 24250 to 100000 MHz | 24250.08 MHz + N * 17.28 MHz, N = 0:4383 | 22256 + N | 22256 to 26639 |

When the UE performs cell search upon power-on, the NCD-SSB may detect corresponding data (only the SSB and MIB, but not the SIB 1). In this case, to reduce complexity of blind detection by the UE, the data may be used to directly find the position of the CD-SSB. That is, a distance between the synchronization raster (sync raster) of the CD-SSB and the NCD-SSB synchronization raster is searched by using the configuration of K_ssb and CORESET in Table 1 and Table 2 (last columns in Table 1 and Table 2).

5. Downlink (Downlink, DL) WUS.

In a 5G system, to further improve power saving performance of the UE, a PDCCH-based WUS is introduced. A function of the WUS is to notify the UE whether a PDCCH needs to be monitored in specific discontinuous reception (Discontinuous Reception, DRX) onDuration (onDuration). In a case that there is no data, the UE may not need to monitor the PDCCH in the onDuration, which is equivalent to describing that the UE may be in a sleep state in an entire DRX long cycle (Long cycle), to further save power.

The WUS signal is a type of downlink control information (Downlink Control Information, DCI), namely, a DCI with a cyclic redundancy check scrambled by a power saving radio network temporary identity (Power Saving Radio Network Temporary Identity, PS-RNTI) (DCI with CRC scrambled by PS-RNTI, DCP), where the PS-RNTI is an RNTI allocated by the network to the UE for a power saving feature. The DCI scrambled by using the RNTI carries a wake-up/sleep indication of the network for the UE. The UE determines, based on the indication, whether to start an onDuration timer and whether to monitor the PDCCH in a next DRX cycle.

6. Special (Special) SSB.

To save energy on a base station side, a company proposes to use a base station in an energy saving mode or in an energy saving state, to send only some special SSBs, including: a sparse SSB, also referred to as a long-period SSB; an SSB/a SIB1/a PRACH-less, where only an SSB is sent, and no SIB1 and/or PRACH is sent; and a light SSB, namely, a part of an existing SSB. Further, the base station in the energy saving mode or the energy saving state may send only a PSS and an SSS.

The following describes in detail a transmission method provided in the embodiments of this application by using some embodiments and application scenarios thereof with reference to the accompanying drawings.

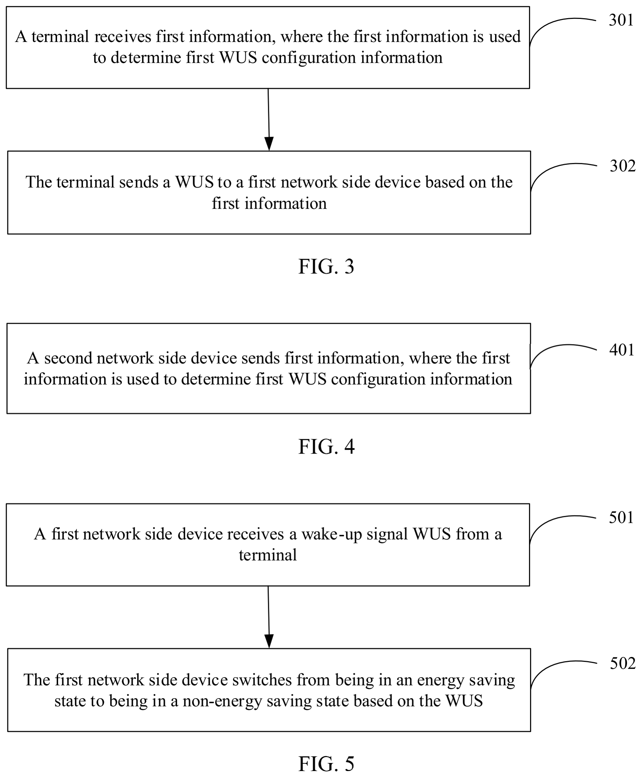

FIG. 3 is a flowchart of a transmission method according to an embodiment of this application. The method is performed by a terminal. As shown in FIG. 3, the method includes the following steps.

Step 301: The terminal receives first information, where the first information is used to determine first WUS configuration information.

In this embodiment, the first information may be the first WUS configuration information, or may be used to explicitly or implicitly indicate the first WUS configuration information. For example, the first information may include an indicator field used to indicate the first WUS configuration information, or a parameter of the first information is related to the first WUS configuration information. The first WUS configuration information may include but is not limited to at least one of a WUS time-frequency resource, a WUS period, an available WUS sequence, a correspondence with an SSB, a trigger condition, and the like.

The first WUS configuration information may be WUS configuration information of a first network side device, that is, a WUS configured in the first WUS configuration information is used to wake up the first network side device. The first network side device may be any network side device in an energy saving state. For example, the network side device in the energy saving state may be understood as a network side device that sends a special (special) SSB.

For example, in a case that cell search or initial access needs to be performed, the terminal may detect the first information sent by the network side device, to wake up the network side device in the energy saving state.

Step 302: The terminal sends the WUS to the first network side device based on the first information.

For example, the terminal may determine the first WUS configuration information based on the first information, and send the WUS to the first network side device based on the first WUS configuration information. Correspondingly, the first network side device may switch from being in an energy saving state to being in a non-energy saving state in response to the WUS, so that a normal SSB or a conventional SSB can be sent. In this way, the terminal can detect the SSB sent by the first network side device to perform initial access. The foregoing non-energy saving state may also be referred to as a normal state, a conventional state, or the like, and may be understood as a state relative to the energy saving state. For example, the network side device in the non-energy saving state may be understood as a network side device that sends a normal SSB or a conventional SSB. The normal SSB or the conventional SSB may be understood as an SSB relative to the special SSB.

According to the transmission method provided in this embodiment of this application, the terminal receives the first information, where the first information is used to determine the first WUS configuration information; and the terminal sends the WUS to the first network side device based on the first information, so that the network side device in the energy saving state can be woken up, and the network side device can be prevented from staying in the energy saving state for a long time. This helps improve communication performance.

Optionally, that the terminal receives first information includes at least one of the following:

the terminal detects a target synchronization signal block SSB on a target frequency, where the target SSB is used to determine the first WUS configuration information; or the target SSB includes configuration information of a physical downlink control channel PDCCH, and the PDCCH is used to determine the first WUS configuration information, or the PDCCH is used to schedule system information used to determine the first WUS configuration information;

the terminal detects a PDCCH based on configuration information of the PDCCH, where the PDCCH is used to determine the first WUS configuration information, or the PDCCH is used to schedule system information used to determine the first WUS configuration information;

the terminal receives system information based on a PDCCH, where the system information is used to determine the first WUS configuration information; and

the terminal receives the first information based on a second RAT when performing initial access to a first radio access technology (Radio Access Technology, RAT).

The target frequency may include at least one first frequency or at least one second frequency. For example, the second frequency may be a frequency or a synchronization raster specified in a radio access network (Radio Access Network, RAN) 4, and may be referred to as a conventional frequency or a conventional synchronization raster. The first frequency may be understood as a frequency or a synchronization raster different from the second frequency, and may be referred to as a specific frequency or a specific synchronization raster. For example, the first frequency may be a frequency or a synchronization raster designed for network energy saving. It should be noted that a GSCN of the first frequency may be different from a GSCN of the second frequency.

The first RAT and the second RAT may be any two different RATs. For example, the first RAT is 5G, and the second RAT is 3G or 4G; or the first RAT is NR, and the second RAT is LTE.

This embodiment is illustrated by using examples in the following cases:

Case 1: The terminal detects the target SSB on the target frequency, where the target SSB is used to determine the first WUS configuration information. In this case, the terminal may determine the first WUS configuration information based on the target SSB and send the WUS.

Case 2: The terminal detects the target SSB on the target frequency, where the target SSB includes the configuration information of the PDCCH, and the PDCCH is used to determine the first WUS configuration information. For example, the PDCCH includes the first WUS configuration information. In this case, the terminal may detect the PDCCH based on the configuration information of the PDCCH, and determine the first WUS configuration information based on the PDCCH and send the WUS.

Case 3: The terminal detects the target SSB on the target frequency, where the target SSB includes the configuration information of the PDCCH, and the PDCCH is used to schedule the system information used to determine the first WUS configuration information. In this case, the terminal may detect the PDCCH based on the configuration information of the PDCCH, receive the system information based on the PDCCH, and determine the first WUS configuration information based on the system information and send the WUS.

Case 4: The terminal detects the PDCCH based on the configuration information of the PDCCH, where the PDCCH is used to determine the first WUS configuration information. In this case, the terminal may determine the first WUS configuration information based on the PDCCH and send the WUS.

Case 5: The terminal detects the PDCCH based on the configuration information of the PDCCH, where the PDCCH is used to schedule the system information used to determine the first WUS configuration information. In this case, the terminal may receive the system information based on the PDCCH, and determine the first WUS configuration information based on the system information and send the WUS.

Case 6: The terminal receives the system information based on the PDCCH, where the system information is used to determine the first WUS configuration information. For example, the system information includes the first WUS configuration information. In this case, the terminal may determine the first WUS configuration information based on the system information and send the WUS.

Case 7: When performing initial access to the first RAT, the terminal may receive the first information based on the second RAT. For example, in a case that the terminal cannot access the network side device in the energy saving state based on the first RAT, the terminal may be connected to the foregoing network side device in the energy saving state or another network side device (namely, a network side device different from the foregoing network side device in the energy saving state) based on the second RAT, to receive the first information, where the first information may be the first WUS configuration information.

It may be understood that, the foregoing case 1 to case 7 are merely examples of this embodiment, and do not constitute a limitation on this embodiment.

In some optional embodiments, in a case that the terminal is located in a serving base station, the terminal may obtain WUS configuration information of a base station in an energy saving state from the serving base station. In a case that the terminal is woken up (for example, is powered on) in a base station in an energy saving state in a coverage hole, the terminal cannot obtain WUS configuration information of the base station in the energy saving state from a serving base station. In this case, the terminal may obtain the WUS configuration information of the base station in the energy saving state based on a WUS configuration information obtaining manner (for example, the foregoing case 1 to case 7) provided in this embodiment, to wake up the base station in the energy saving state.

Optionally, the target SSB includes a first SSB or a second SSB, the first SSB is a first-type SSB, and the second SSB is a second-type SSB.

For example, the second-type SSB may be understood as a normal SSB or a conventional SSB. For example, the second-type SSB may be an SSB defined in 3GPP release 15 (Release 15, R15), release 16 (Release 16, R16), release 17 (Release 17, R17), release 18 (Release 18, R18), or the like, and the second-type SSB may be an SSB used for initial access. The first-type SSB may be understood as an SSB different from the second-type SSB. For example, the first-type SSB is an SSB designed specifically for network energy saving. Alternatively, the second-type SSB may be understood as an SSB detected on a frequency or a synchronization raster specified in the RAN 4, and the first-type SSB may be understood as an SSB detected on a frequency or a synchronization raster specifically designed for network energy saving.

Optionally, at least one of the following may be met between the first-type SSB and the second-type SSB:

a period of the first-type SSB is different from a period of the second-type SSB;

a time length of the first-type SSB is different from a time length of the second-type SSB;

signal or channel content included in the first-type SSB is different from signal or channel content included in the second-type SSB, where for example, the first-type SSB includes at least one of a PSS and an SSS, and the second-type SSB includes a PSS, an SSS, and a PBCH; and

a quantity of candidate occasions of the first-type SSB in one sending period is different from a quantity of candidate occasions of the second-type SSB in one sending period.

Optionally, the first-type SSB may be a special SSB sent by the network side device in the energy saving state, and the second-type SSB may be a normal SSB or a conventional SSB sent by the network side device in the non-energy saving state.

Optionally, a sending period of the first-type SSB may be protocol-predefined. For example, a period of sending the SSB by the network side device in the energy saving state, for example, 160 ms, is protocol-predefined.

In an implementation, a type of SSB (for example, the first-type SSB) may be designed specifically for network energy saving, to indicate the WUS configuration information of the network side device in the energy saving state, so that the terminal can quickly obtain the WUS configuration information of the network side device in the energy saving state.

In another implementation, an existing SSB (for example, the second-type SSB) may be reused to indicate the WUS configuration information of the network side device in the energy saving state, so that a design of SSB detection can be simplified.

Optionally, the target SSB includes the first SSB, and the target frequency includes at least one of the following:

at least one first frequency, where the first frequency is a frequency or a synchronization raster that is protocol-predefined and that supports detection of the first-type SSB;

a frequency indicated by a detected third SSB; and

a frequency determined based on a frequency on which a third SSB is detected, where

the third SSB is the first-type SSB.

In an implementation, the terminal may sequentially perform SSB detection on first frequencies until the first SSB is detected on the first frequency (for example, the SSB that may be used to determine the first WUS configuration information), so that complexity of detection of the first SSB can be reduced.

In another implementation, the terminal may first detect the third SSB, and then determine, based on the detected third SSB, a frequency used to detect the first SSB, so that the first SSB can be detected on the determined frequency. This helps reduce some unnecessary detections and save system resources.

The third SSB may be any SSB detected on the first frequency, or the third SSB may be the 1st SSB detected on the first frequency. For example, the terminal may sequentially perform SSB detection on first frequencies, and determine, based on the 1st detected SSB, the frequency used to detect the first SSB.

The frequency indicated by the detected third SSB may be the first frequency indicated by the detected third SSB.

The frequency determined based on the frequency on which the third SSB is, for example, a first frequency closest to the frequency on which the third SSB is detected, a first frequency closest to the frequency on which the third SSB is detected in all first frequencies less than the frequency on which the third SSB is detected, or a first frequency closest to the frequency on which the third SSB is detected in all first frequencies greater than the frequency on which the third SSB is detected.

Optionally, the target SSB includes the second SSB, and the target frequency includes at least one of the following

at least one second frequency, where the second frequency is a frequency or a synchronization raster that is protocol-predefined and that supports detection of the second-type SSB;

a frequency indicated by a detected fourth SSB; and

a frequency determined based on frequency on which a fourth SSB is detected, where

the fourth SSB is the second-type SSB.

In an implementation, the terminal may sequentially perform SSB detection on second frequencies until the second SSB is detected on the second frequency (for example, the SSB that may be used to determine the first WUS configuration information), so that complexity of detection of the second SSB can be reduced.

In another implementation, the terminal may first detect the fourth SSB, and then determine, based on the detected fourth SSB, a frequency used to detect the second SSB, so that the second SSB can be detected on the determined frequency. This helps reduce some unnecessary detections and save system resources.

The fourth SSB may be any SSB detected on the second frequency, or the fourth SSB may be the 1st SSB detected on the second frequency. For example, the terminal may sequentially perform SSB detection on second frequencies, and determine, based on the 1st detected SSB, the frequency used to detect the second SSB.

The frequency indicated by the detected fourth SSB may be the second frequency indicated by the detected fourth SSB.

The frequency determined based on the frequency on which the fourth SSB is, for example, a second frequency closest to the frequency on which the fourth SSB is detected, a second frequency closest to the frequency on which the fourth SSB is detected in all second frequencies less than the frequency on which the fourth SSB is detected, or a second frequency closest to the frequency on which the fourth SSB is detected in all second frequencies greater than the frequency on which the fourth SSB is detected.

Optionally, before or during that the terminal receives first information, the method further includes:

the terminal detects a fifth SSB on the at least one second frequency, where

the fifth SSB is used by the terminal to perform initial access, the fifth SSB is the second-type SSB, and the second frequency is a frequency or a synchronization raster that is protocol-predefined and that supports detection of the second-type SSB.

For the second frequency and the second-type SSB, refer to related descriptions in the foregoing embodiment. Details are not described herein.

For example, in a case that the terminal needs to perform initial access, the terminal may detect, on each second frequency, an SSB that can be used by the terminal to perform initial access, namely, the fifth SSB.

It should be noted that, in this implementation, regardless of whether the terminal detects a fifth SSB that meets an access condition, for example, a fifth SSB that meets a corresponding reference signal received power (Reference Signal Received Power, RSRP) condition, or a fifth SSB that meets a camping requirement of the terminal, the terminal may obtain the first information, and send the WUS based on the first information, to wake up the network side device in the energy saving state, so that the SSB that is sent by the network side device and that is used by the terminal to perform initial access can be detected.

Optionally, that the terminal receives first information includes:

the terminal receives the first information in a case that the terminal detects no fifth SSB on the at least one second frequency or the detected fifth SSB does not meet an access condition.

In this embodiment, in a case that the terminal detects no fifth SSB on the at least one second frequency or the detected fifth SSB does not meet the access condition, the terminal may receive the first information, and send the WUS based on the first information, to wake up the network side device in the energy saving state, so that the terminal can detect the SSB that is sent by the network side device and that is used by the terminal to perform initial access, to perform initial access, and reduce an initial access failure of the terminal.

In some optional embodiments, when the terminal detects, on the at least one second frequency, the fifth SSB that meets the access condition, the terminal may directly perform initial access based on the fifth SSB. In this case, step 301 and step 302 may not be performed, to save system resources.

Optionally, a detection parameter of the terminal for the first-type SSB is different from a detection parameter of the terminal for the second-type SSB; and

the detection parameter includes at least one of the following: a period of an SSB, a time length of the SSB, a signal or channel content included in the SSB, and a quantity of candidate occasions of the SSB in one sending period.

For the first-type SSB and the second-type SSB, refer to related descriptions in the foregoing embodiment. Details are not described herein.

For example, the signal or channel content included in the SSB may reflect or indicate a structure of the SSB, so that the terminal can perform SSB detection based on the structure of the SSB.

In this embodiment, the terminal may detect the first-type SSB based on the detection parameter of the first-type SSB, and detect the second-type SSB based on the detection parameter of the second-type SSB, so that accuracy of detection of each type of SSB can be improved.

Optionally, a position of the second frequency is orthogonal to a position of the first frequency.

In this embodiment, the position of the second frequency is orthogonal to the position of the first frequency, that is, GSCNs are different, so that interference between the two can be reduced. This helps accurately detect the first-type SSB and the second-type SSB.

In some optional embodiments, the first-type SSB is used to indicate the WUS configuration information, and the second-type SSB is not used to indicate the WUS configuration information.

Optionally, the position of the second frequency partially overlaps or overlaps the position of the first frequency. In other words, the frequency or the synchronization raster that is protocol-predefined and that supports detection of the first-type SSB partially overlaps or overlaps the frequency or the synchronization raster that is protocol-predefined and that supports detection of the second-type SSB.

Optionally, the fifth SSB includes the configuration information of the PDCCH, and the PDCCH is used to determine the first WUS configuration information, or the PDCCH is used to schedule the system information used to determine the first WUS configuration information.

In this embodiment, the fifth SSB detected on the second frequency may include the configuration information of the PDCCH. If the PDCCH is used to determine the first WUS configuration information, the terminal may detect the PDCCH based on the configuration information of the PDCCH, and determine the first WUS configuration information based on the PDCCH. For example, the PDCCH may include the first WUS configuration information. Alternatively, if the PDCCH is used to schedule the system information used to determine the first WUS configuration information, the terminal may detect the PDCCH based on the configuration information of the PDCCH, receive the system information based on the PDCCH, and determine the first WUS configuration information based on the system information. For example, the system information may include the first WUS configuration information.

In this embodiment, in a case that the terminal needs to perform initial access, the terminal may detect the fifth SSB on the second frequency, where the fifth SSB may carry the configuration information of the PDCCH that may be used to determine the first WUS configuration information. Further, the terminal may detect the PDCCH based on the configuration information of the PDCCH, and further determine the first WUS configuration information based on the detected PDCCH or receive the system information that may be used to determine the first WUS configuration information. In this way, while compatible with an existing SSB detection mechanism, the WUS configuration information can be easily obtained.

Optionally, the first WUS configuration information includes one of the following:

default WUS configuration information or protocol-predefined WUS configuration information;
WUS configuration information related to the first information; and
WUS configuration information indicated by an indicator field of the first information.

In an implementation, in a case that the first information is received, the terminal may send the WUS by using the default WUS configuration information or the protocol-predefined WUS configuration information. For example, if the terminal detects the first SSB on the first frequency, it indicates that there is the network side device in the energy saving state, and the terminal may send the WUS by using the default WUS configuration information or the protocol-predefined WUS configuration information.

In another implementation, the first information may implicitly indicate the first WUS configuration information, that is, the terminal determines the first WUS configuration information based on related information (for example, a received frequency and a pattern) of the first information. In this way, signaling overheads can be reduced.

In still another implementation, the first information may explicitly indicate the first WUS configuration information, that is, the first WUS configuration information is indicated by using the indicator field of the first information. In this way, the first WUS configuration information can be obtained more conveniently and accurately.

Optionally, the first information is the target SSB; and the WUS configuration information related to the first information includes one of the following:

WUS configuration information related to a position of the target SSB;
WUS configuration information related to a period of the target SSB;
WUS configuration information related to a pattern (pattern) of the target SSB;
WUS configuration information related to a quantity of antenna ports corresponding to the target SSB;
WUS configuration information related to at least one of a sequence of a primary synchronization signal PSS and a sequence of a secondary synchronization signal SSS of the target SSB; and
WUS configuration information related to a frequency on which the target SSB is detected.

The WUS configuration information related to the position of the target SSB means that, for example, there is a fixed offset (offset) between a time-frequency resource of the WUS and an SSB (namely, the target SSB) in an SSB burst (burst), where the SSB in the SSB burst may be the 1st SSB, the last SSB, a specified SSB, or the like in the SSB burst, and the offset value may be protocol-predefined.

The WUS configuration information related to the period of the target SSB means that, for example, an association relationship between the period of the SSB and the WUS configuration information (for example, at least one of the WUS time-frequency resource, the WUS period, and the available WUS sequence) may be pre-established, so that the WUS configuration information associated with the period of the target SSB may be determined based on the period of the target SSB.

The WUS configuration information related to the pattern of the target SSB means that, for example, an association relationship between the pattern of the SSB and the WUS configuration information (for example, at least one of the WUS time-frequency resource, the WUS period, and the available WUS sequence) may be pre-established, so that the WUS configuration information associated with the pattern of the target SSB may be determined based on the pattern of the target SSB.

The WUS configuration information related to the quantity of antenna ports corresponding to the target SSB means that, for example, an association relationship between the quantity of antenna ports corresponding to the SSB and the WUS configuration information (for example, at least one of the WUS time-frequency resource, the WUS period, and the available WUS sequence) may be pre-established, so that the WUS configuration information associated with the quantity of antenna ports corresponding to the target SSB may be determined based on the quantity of antenna ports corresponding to the target SSB.

For the WUS configuration information related to at least one of the sequence of the PSS and the sequence of the SSS of the target SSB means that, for example, a PCI value may be determined by using the PSS of the target SSB and the SSS of the target SSB, and the WUS configuration information may be determined based on the determined PCI value. It may be understood that different PCI values may be pre-determined by using different $N_{ID}^{(1)}$ and $N_{ID}^{(2)}$, and an association relationship between different PCI values and different WUS configuration information (for example, at least one of the WUS time-frequency resource, the WUS period, and the available WUS sequence) may be established, so that the associated WUS configuration information can be determined based on the determined PCI value.

The WUS configuration information related to the frequency on which the target SSB is detected means that, for example, an association relationship between a frequency (for example, the first frequency or the second frequency) and the WUS configuration information (for example, at least one of the WUS time-frequency resource, the WUS period, and the available WUS sequence) may be pre-established, so that the WUS configuration information associated with the frequency on which the target SSB is detected can be determined based on the frequency on which the target SSB is detected.

Optionally, the first information is the target SSB; and
the WUS configuration information indicated by the indicator field of the first information includes one of the following:

WUS configuration information indicated by an indicator field of the target SSB; and
WUS configuration information indicated by an indicator field of a physical broadcast channel PBCH of the target SSB.

In an implementation, the WUS configuration information may be indicated by using the indicator field of the target SSB. The indicator field, in the target SSB, used to indicate the WUS configuration information may be a newly added indicator field, for example, an indicator field carried in a newly added payload (payload) in the target SSB; or the indicator field, in the target SSB, used to indicate the WUS configuration information may reuse an existing indicator field.

In another implementation, the WUS configuration information may be indicated by using the indicator field of the PBCH of the target SSB. The indicator field, in the PBCH, used to indicate the WUS configuration information may be a newly added indicator field, for example, an indicator field carried in a newly added payload (payload) in the PBCH; or the indicator field, in the PBCH, used to indicate the WUS configuration information may reuse an existing indicator field.

Optionally, after that the terminal sends the WUS to the first network side device based on the first information, the method further includes:

the terminal detects a sixth SSB on a third frequency; and
the terminal performs initial access based on the sixth SSB.

The sixth SSB may be a normal SSB or a conventional SSB, and may be used by the terminal to perform initial access.

The third frequency may include at least one of the second frequency and the first frequency. For example, the third frequency may include the protocol-predefined second frequency, the second frequency indicated by the detected first SSB, the second frequency determined based on the frequency on which the first SSB is detected, or the like. In some optional embodiments, the third frequency is the second frequency.

During actual application, the terminal sends the WUS to the first network side device, and the first network side device may switch from being in the energy saving state to being in the non-energy saving state in response to the WUS, and may send, on the third frequency, the SSB used for initial access, so that the terminal can detect the SSB sent by the first network side device, and perform initial access based on the received SSB.

Optionally, the third frequency includes at least one of the following:

a protocol-predefined frequency;
a frequency on which the first information is detected;
a frequency determined based on a frequency on which the first information is detected; and
a frequency indicated by the indicator field of the first information.

For example, in a case that the first information is the target SSB, the third frequency may include the frequency on which the target SSB is detected; or the third frequency may include a frequency determined based on the frequency on which the target SSB is detected, for example, a frequency that is spaced by a preset quantity of frequencies from the frequency on which the target SSB is detected, or a frequency closest to the frequency on which the target SSB is detected; or the third frequency may include the frequency indicated by the indicator field of the target SSB, the indicator field of the PBCH of the target SSB, or the like. The indicator field, in the target SSB or PBCH, used to indicate the third frequency may be a newly added indicator field or may reuse an existing indicator field. For example, a payload may be added to the target SSB (for example, a light SSB) to carry a specific indicator field, to indicate an offset between a position of a synchronization raster that sends a normal SSB and a current synchronization raster (namely, a synchronization raster on which the target SSB is detected).

Optionally, the method further includes:

the terminal determines, based on target information, that the first network side device is in an energy saving state, where
the target information includes at least one of the first information, second information, and third information;
the second information is an SSB detected by the terminal on at least one first frequency or information received based on a second RAT, and the first frequency is a frequency or a synchronization raster that is protocol-predefined and that supports detection of the first-type SSB; and
the third information is an SSB detected by the terminal on at least one second frequency, and the second frequency is a frequency or a synchronization raster that is protocol-predefined and that supports detection of the second-type SSB.

In an implementation, the first information may not only be used to determine the first WUS configuration information, but also may be used to determine whether the first network side device is in the energy saving state. For example, the first information may implicitly indicate whether the first network side device is in the energy saving state. For example, if the terminal receives the first information, it indicates that the first network side device is in the energy saving state. Alternatively, the first information may explicitly indicate whether the network side device is in the energy saving state, for example, whether the network side device is in the energy saving state is indicated by using the indicator field of the first information.

In another implementation, the SSB may be detected on the first frequency, and the SSB explicitly or implicitly indicates whether the first network side device is in the energy saving state; or information used to indicate whether the first network side device is in the energy saving state may be received by using the second RAT.

In still another implementation, the SSB may be detected on the second frequency, and the SSB explicitly or implicitly indicates whether the first network side device is in the energy saving state.

Optionally, the first WUS configuration information includes at least one of the following: the WUS time-frequency resource, the WUS period, and the available WUS sequence.

FIG. 4 is a flowchart of a transmission method according to an embodiment of this application. The method may be performed by a second network side device. As shown in FIG. 4, the method includes the following step.

Step 401: The second network side device sends first information, where the first information is used to determine first WUS configuration information.

It should be noted that, in some implementations, the second network side device and the first network side device may be a same network side device. In some other implementations, the second network side device and the first network side device may be different network side devices.

It may be understood that in a case that the second network side device is the first network side device, after the second network side device sends the first information, the second network side device may further receive a WUS sent by a terminal, and switch from being in an energy saving state to being in a non-energy saving state based on the WUS.

Optionally, that the second network side device sends first information includes:

the second network side device sends a target synchronization signal block SSB on a target frequency, where the target SSB is used to determine the first WUS configuration information; or the target SSB includes configuration information of a physical downlink control channel PDCCH, and the PDCCH is used to determine the first WUS configuration information, or the PDCCH is used to schedule system information used to determine the first WUS configuration information;

the second network side device sends a PDCCH based on configuration information of the PDCCH, where the PDCCH is used to determine the first WUS configuration information, or the PDCCH is used to schedule system information used to determine the first WUS configuration information;

the second network side device sends system information based on a PDCCH, where the system information is used to determine the first WUS configuration information; and

the second network side device sends the first information based on a second radio access technology RAT.

Optionally, the target SSB includes a first SSB or a second SSB, the first SSB is a first-type SSB, and the second SSB is a second-type SSB.

For example, in a case that the target SSB is the first SSB, the second network side device and the first network side device may be a same network side device. In a case that the target SSB is the second SSB, the second network side device and the first network side device may be different network side devices.

Optionally, the target SSB includes the first SSB, the target frequency includes at least one first frequency, and the first frequency is a frequency or a synchronization raster that is protocol-predefined and that supports detection of the first-type SSB.

Optionally, the target SSB includes the second SSB, the target frequency includes at least one second frequency, and the second frequency is a frequency or a synchronization raster that is protocol-predefined and that supports detection of the second-type SSB.

Optionally, a sending parameter of the second network side device for the first-type SSB is different from a sending parameter of the second network side device for the second-type SSB; and

the sending parameter includes at least one of the following: a period of an SSB, a time length of the SSB, a signal or channel content included in the SSB, and a quantity of candidate occasions of the SSB in one sending period.

Optionally, a position of the second frequency is orthogonal to a position of the first frequency.

Optionally, the first WUS configuration information includes at least one of the following: a WUS time-frequency resource, a WUS period, and an available WUS sequence.

It should be noted that for an implementation of this implementation, refer to related descriptions of the embodiment shown in FIG. 3. Details are not described herein.

FIG. 5 is a flowchart of a transmission method according to an embodiment of this application. The method may be performed by a first network side device. As shown in FIG. 5, the method includes the following steps.

Step 501: The first network side device receives a WUS from a terminal.

In this step, the first network side device may receive the WUS based on first WUS configuration information.

Step 502: The first network side device switches from being in an energy saving state to being in a non-energy saving state based on the WUS.

Optionally, after that the first network side device switches from being in an energy saving state to being in a non-energy saving state based on the WUS, the method further includes: The first network side device sends an SSB on a third frequency, where the SSB is used for initial access.

Optionally, the third frequency includes at least one of the following: a protocol-predefined frequency; a frequency for sending the first information; and a frequency determined based on the frequency for sending the first information, where the first information is WUS configuration information used to determine the first network side device.

It should be noted that for an implementation of this implementation, refer to related descriptions of the embodiment shown in FIG. 3. Details are not described herein.

It should be noted that, the transmission method provided in the embodiments of this application may be performed by a transmission apparatus, or a control module in the transmission apparatus for performing the transmission method. The transmission apparatus provided in the embodiments of this application is described by using an example in which the transmission apparatus performs the transmission method.

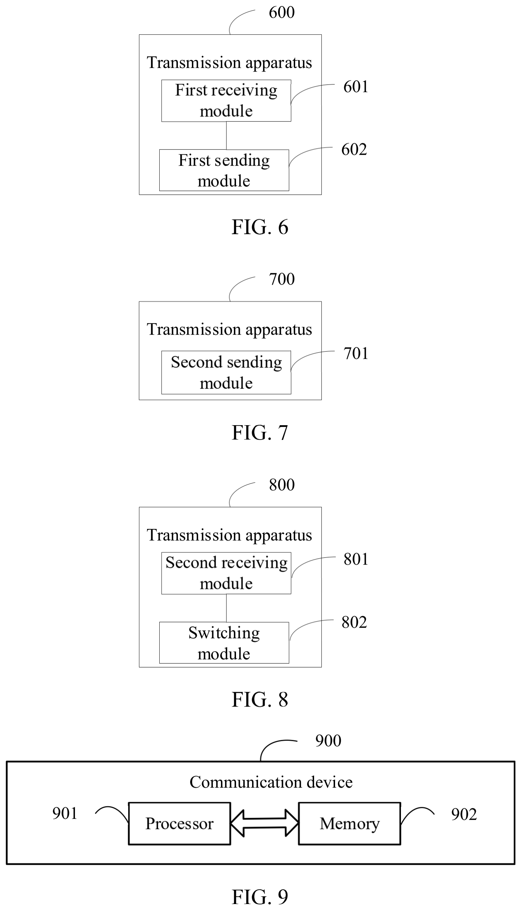

FIG. 6 is a diagram of a structure of a transmission apparatus according to an embodiment of this application. As shown in FIG. 6, the transmission apparatus 600 includes:

a first receiving module 601, configured to receive first information, where the first information is used to determine first wake-up signal WUS configuration information; and

a first sending module 602, configured to send a WUS to a first network side device based on the first information.

Optionally, the first receiving module is specifically configured to perform at least one of the following:

detecting a target synchronization signal block SSB on a target frequency, where the target SSB is used to determine the first WUS configuration information; or the target SSB includes configuration information of a physical downlink control channel PDCCH, and the PDCCH is used to determine the first WUS configuration information, or the PDCCH is used to schedule system information used to determine the first WUS configuration information;

detecting the PDCCH based on configuration information of a PDCCH, where the PDCCH is used to determine the first WUS configuration information, or the PDCCH is used to schedule system information used to determine the first WUS configuration information;

receiving system information based on a PDCCH, where the system information is used to determine the first WUS configuration information; and

receiving the first information based on a second RAT when performing initial access to a first radio access technology RAT.

Optionally, the target SSB includes a first SSB or a second SSB, the first SSB is a first-type SSB, and the second SSB is a second-type SSB.

Optionally, the target SSB includes the first SSB, and the target frequency includes at least one of the following:

at least one first frequency, where the first frequency is a frequency or a synchronization raster that is protocol-predefined and that supports detection of the first-type SSB;

a frequency indicated by a detected third SSB; and

a frequency determined based on a frequency on which a third SSB is detected, where

the third SSB is the first-type SSB.

Optionally, the target SSB includes the second SSB, and the target frequency includes at least one of the following

at least one second frequency, where the second frequency is a frequency or a synchronization raster that is protocol-predefined and that supports detection of the second-type SSB;

a frequency indicated by a detected fourth SSB; and

a frequency determined based on a frequency on which a fourth SSB is detected, where

the fourth SSB is the second-type SSB.

Optionally, the first receiving module is further configured to:

detect a fifth SSB on the at least one second frequency before or during receiving the first information, where the fifth SSB is used by a terminal to perform initial access, the fifth SSB is the second-type SSB, and the second frequency is a frequency or a synchronization raster that is protocol-predefined and that supports detection of the second-type SSB.

Optionally, the first receiving module is specifically configured to:

receive the first information in a case that no fifth SSB is detected on the at least one second frequency or the detected fifth SSB does not meet an access condition.

Optionally, a detection parameter of the first receiving module for the first-type SSB is different from a detection parameter of the first receiving module for the second-type SSB; and

the detection parameter includes at least one of the following: a period of an SSB, a time length of the SSB, a signal or channel content included in the SSB, and a quantity of candidate occasions of the SSB in one sending period.

Optionally, a position of the second frequency is orthogonal to a position of the first frequency.

Optionally, the fifth SSB includes the configuration information of the PDCCH, and the PDCCH is used to determine the first WUS configuration information, or the PDCCH is used to schedule the system information used to determine the first WUS configuration information.

Optionally, the first WUS configuration information includes one of the following:

default WUS configuration information or protocol-predefined WUS configuration information;

WUS configuration information related to the first information; and

WUS configuration information indicated by an indicator field of the first information.

Optionally, the first information is the target SSB; and
the WUS configuration information related to the first information includes one of the following:

WUS configuration information related to a position of the target SSB;
WUS configuration information related to a period of the target SSB;
WUS configuration information related to a pattern of the target SSB;
WUS configuration information related to a quantity of antenna ports corresponding to the target SSB;
WUS configuration information related to at least one of a sequence of a primary synchronization signal PSS and a sequence of a secondary synchronization signal SSS of the target SSB; and
WUS configuration information related to a frequency on which the target SSB is detected.

Optionally, the first information is the target SSB; and
the WUS configuration information indicated by the indicator field of the first information includes one of the following:

WUS configuration information indicated by an indicator field of the target SSB; and

WUS configuration information indicated by an indicator field of a physical broadcast channel PBCH of the target SSB.

Optionally, the first receiving module is further configured to: after sending the WUS to the first network side device based on the first information, detect a sixth SSB on a third frequency; and
the first sending module is further configured to perform initial access based on the sixth SSB.
Optionally, the third frequency includes at least one of the following:

a protocol-predefined frequency;
a frequency on which the first information is detected;
a frequency determined based on a frequency on which the first information is detected; and
a frequency indicated by an indication field of the first information.

Optionally, the apparatus further includes:

a determining module, configured to determine, based on target information, that the first network side device is in an energy saving state, where
the target information includes at least one of the first information, second information, and third information;
the second information is an SSB detected by the terminal on at least one first frequency or information received based on a second RAT, and the first frequency is a frequency or a synchronization raster that is protocol-predefined and that supports detection of the first-type SSB; and
the third information is an SSB detected by the terminal on at least one second frequency, and the second frequency is a frequency or a synchronization raster that is protocol-predefined and that supports detection of the second-type SSB.

Optionally, the first WUS configuration information includes at least one of the following: a WUS time-frequency resource, a WUS period, and an available WUS sequence.
The transmission apparatus in this embodiment of this application may be an electronic device, for example, an electronic device with an operating system, or may be a component in the electronic device, for example, an integrated circuit or a chip. The electronic device may be a terminal, or another device that is not the terminal. For example, the terminal may include but is not limited to the foregoing listed types of the terminal 11, and the another device may be a server, a network attached storage (Network Attached Storage, NAS), or the like. This is not specifically limited in this embodiment of this application.
The transmission apparatus provided in this embodiment of this application can implement the processes implemented in the method embodiment of FIG. 3, and same technical effect is achieved. To avoid repetition, details are not described herein again.
FIG. 7 is a diagram of a structure of a transmission apparatus according to an embodiment of this application. As shown in FIG. 7, the transmission apparatus 700 includes:
a second sending module 701, configured to send first information, where the first information is used to determine first wake-up signal WUS configuration information.
Optionally, the second sending module is specifically configured to:

send a target synchronization signal block SSB on a target frequency, where the target SSB is used to determine the first WUS configuration information; or the target SSB includes configuration information of a physical downlink control channel PDCCH, and the PDCCH is used to determine the first WUS configuration information, or the PDCCH is used to schedule system information used to determine the first WUS configuration information;

send a PDCCH based on configuration information of the PDCCH, where the PDCCH is used to determine the first WUS configuration information, or the PDCCH is used to schedule system information used to determine the first WUS configuration information;

send system information based on a PDCCH, where the system information is used to determine the first WUS configuration information; and

send the first information based on a second radio access technology RAT.

Optionally, the target SSB includes a first SSB or a second SSB, the first SSB is a first-type SSB, and the second SSB is a second-type SSB.

Optionally, the target SSB includes the first SSB, the target frequency includes at least one first frequency, and the first frequency is a frequency or a synchronization raster that is protocol-predefined and that supports detection of the first-type SSB.

Optionally, the target SSB includes the second SSB, the target frequency includes at least one second frequency, and the second frequency is a frequency or a synchronization raster that is protocol-predefined and that supports detection of the second-type SSB.

Optionally, a sending parameter of the second network side device for the first-type SSB is different from a sending parameter of the second network side device for the second-type SSB; and

the sending parameter includes at least one of the following: a period of an SSB, a time length of the SSB, a signal or channel content included in the SSB, and a quantity of candidate occasions of the SSB in one sending period.

Optionally, a position of the second frequency is orthogonal to a position of the first frequency.

Optionally, the first WUS configuration information includes at least one of the following: a WUS time-frequency resource, a WUS period, and an available WUS sequence.

The transmission apparatus in this embodiment of this application may be an electronic device, for example, an electronic device with an operating system, or may be a component in the electronic device, for example, an integrated circuit or a chip. The electronic device may be a network side device, or may be another device that is not the network side device. For example, the network side device may include but is not limited to the foregoing listed types of the network side device 12, and the another device may be a server, a network attached storage (Network Attached Storage, NAS), or the like. This is not specifically limited in this embodiment of this application.

The transmission apparatus provided in this embodiment of this application can implement the processes implemented in the method embodiment of FIG. 4, and same technical effect is achieved. To avoid repetition, details are not described herein again.

FIG. 8 is a diagram of a structure of a transmission apparatus according to an embodiment of this application. As shown in FIG. 8, the transmission apparatus 800 includes:

a second receiving module 801, configured to receive a wake-up signal WUS from a terminal; and

a switching module 802, configured to switch from being in an energy saving state to being in a non-energy saving state based on the WUS.

The transmission apparatus in this embodiment of this application may be an electronic device, for example, an electronic device with an operating system, or may be a component in the electronic device, for example, an integrated circuit or a chip. The electronic device may be a network side device, or may be another device that is not the network side device. For example, the network side device may include but is not limited to the foregoing listed types of the network side device 12, and the another device may be a server, a network attached storage (Network Attached Storage, NAS), or the like. This is not specifically limited in this embodiment of this application.

The transmission apparatus provided in this embodiment of this application can implement the processes implemented in the method embodiment of FIG. 5, and same technical effect is achieved. To avoid repetition, details are not described herein again.

Optionally, as shown in FIG. 9, an embodiment of this application further provides a communication device 900. The communication device 900 includes a processor 901 and a memory 902, and the memory 902 stores a program or an instruction that is executable on the processor 901. For example, when the communication device 900 is a terminal, and the program or the instruction is executed by the processor 901, the steps of the foregoing transmission method embodiment are implemented, and same technical effect can be achieved. When the communication device 900 is a network side device, and the program or the instruction is executed by the processor 901, the steps of the foregoing transmission method embodiment are implemented, and same technical effect can be achieved. To avoid repetition, details are not described herein again.

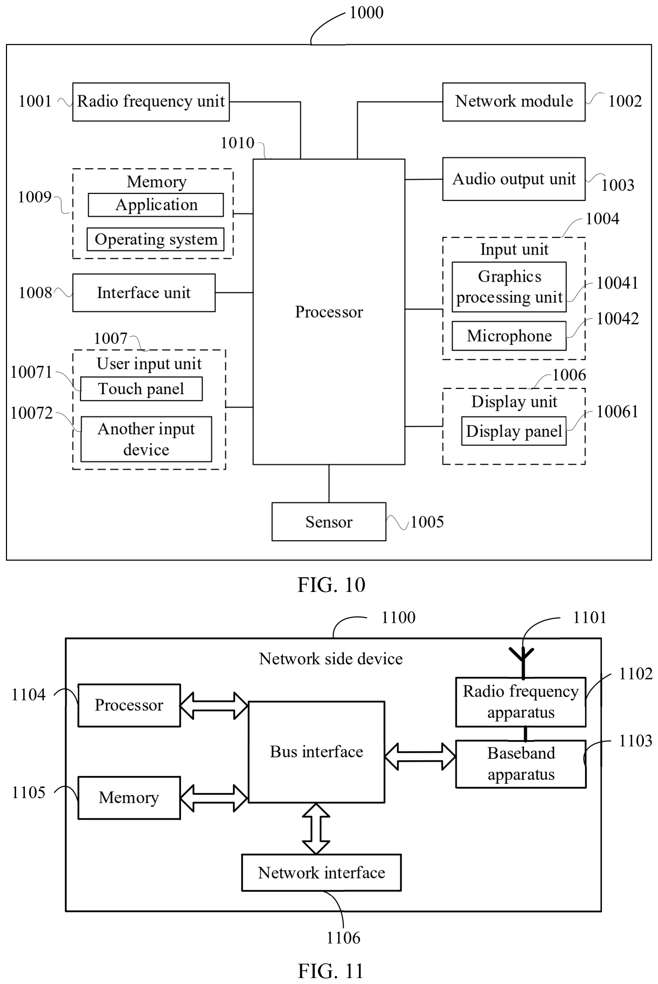

An embodiment of this application further provides a terminal. The terminal includes a processor and a communication interface. The communication interface is configured to: receive first information, where the first information is used to determine first wake-up signal WUS configuration information; and send a WUS to a first network side device based on the first information. The terminal embodiment corresponds to the method embodiment on the terminal side, each implementation process and implementation of the method embodiment can be applied to the terminal embodiment, and same technical effect can be achieved. Specifically, FIG. 10 is a schematic diagram of a hardware structure of a terminal according to an embodiment of this application.

The terminal 1000 includes but is not limited to at least some components in a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

A person skilled in the art can understand that the terminal 1000 may further include a power supply (for example, a battery) that supplies power to each component. The power supply may be logically connected to the processor 1010 by using a power supply management system, to implement functions such as charging and discharging management, and power consumption management by using the power supply management system. The terminal structure shown in FIG. 10 constitutes no limitation on the terminal, and the terminal may include more or fewer components than those shown in the figure, or combine some components, or have different component arrangements. Details are not described herein again.

It should be understood that in this embodiment of this application, the input unit 1004 may include a graphics processing unit (Graphics Processing Unit, GPU) 10041 and a microphone 10042. The graphics processing unit 10041 processes image data of a static picture or a video obtained by an image capture apparatus (for example, a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (for example, a volume control button or a power on/off button), a trackball, a mouse, and a joystick. Details are not described herein again.

In this embodiment of this application, after receiving downlink data from a network side device, the radio frequency unit 1001 may transmit the downlink data to the processor 1010 for processing. In addition, the radio frequency unit 1001 may send uplink data to the network side device. Usually, the radio frequency unit 1001 includes but is not limited to an antenna, an amplifier, a transceiver, a coupler, a low noise amplifier, a duplexer, and the like.

The memory 1009 may be configured to store a software program or an instruction and various data. The memory 1009 may mainly include a first storage area for storing a program or an instruction and a second storage area for storing data. The first storage area may store an operating system, and an application or an instruction required by at least one function (for example, a sound playing function or an image playing function). In addition, the memory 1009 may include a volatile memory or a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1009 in this embodiment of this application includes but is not limited to these memories and any memory of another proper type.

The processor 1010 may include one or more processing units. Optionally, an application processor and a modem processor are integrated into the processor 1010. The application processor mainly processes an operating system, a user interface, an application, or the like. The modem processor mainly processes a wireless communication signal, for example, a baseband processor. It may be understood that, alternatively, the modem processor may not be integrated into the processor 1010.

The radio frequency unit 1001 is configured to: receive first information, where the first information is used to determine first wake-up signal (Wake-up Signal, WUS) configuration information; and send a WUS to a first network side device based on the first information.

It may be understood that, for an implementation process of the implementations in this embodiment, refer to related descriptions of the foregoing method embodiment, and same or corresponding technical effect may be achieved. To avoid repetition, details are not described herein again.

An embodiment of this application further provides a network side device. The network side device includes a processor and a communication interface. The communication interface is configured to send first information, where the first information is used to determine first wake-up signal WUS configuration information, or the communication interface is configured to receive a wake-up signal WUS from a terminal; and the processor is configured to switch from being in an energy saving state to being in a non-energy saving state based on the WUS. The network side device embodiment corresponds to the method embodiment of the network side device, each implementation process and implementation of the method embodiment can be applied to the network side device embodiment, and same technical effect can be achieved.

Specifically, an embodiment of this application further provides a network side device. As shown in FIG. 11, the network side device 1100 includes an antenna 1101, a radio frequency apparatus 1102, a baseband apparatus 1103, a processor 1104, and a memory 1105. The antenna 1101 is connected to the radio frequency apparatus 1102. In an uplink direction, the radio frequency apparatus 1102 receives information through the antenna 1101, and sends the received information to the baseband apparatus 1103 for processing. In a downlink direction, the baseband apparatus 1103 processes information that needs to be sent, and sends processed information to the radio frequency apparatus 1102. The radio frequency apparatus 1102 processes the received information, and sends processed information through the antenna 1101.

In the foregoing embodiment, the method performed by the network side device may be implemented in the baseband apparatus 1103. The baseband apparatus 1103 includes a baseband processor.

For example, the baseband apparatus 1103 may include at least one baseband board. A plurality of chips are disposed on the baseband board. As shown in FIG. 11, one chip is, for example, a baseband processor, and is connected to the memory 1105 through a bus interface, to invoke a program in the memory 1105 to perform the operations of the network device shown in the foregoing method embodiment.

The network side device may further include a network interface 1106, and the interface is, for example, a common public radio interface (Common Public Radio Interface, CPRI).

Specifically, the network side device 1100 in this embodiment of this application further includes an instruction or a program that is stored in the memory 1105 and that is executable on the processor 1104. The processor 1104 invokes the instruction or the program in the memory 1105 to perform the method performed by the modules shown in FIG. 7 or FIG. 8, and same technical effect is achieved. To avoid repetition, details are not described herein.

An embodiment of this application further provides a readable storage medium. The readable storage medium stores a program or an instruction; and when the program or the instruction is executed by a processor, the processes of the foregoing transmission method embodiment are implemented, and same technical effect can be achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or an optical disc. In some examples, the readable storage medium may be a non-transient readable storage medium.

An embodiment of this application further provides a chip. The chip includes a processor and a communication interface, the communication interface is coupled to the processor, the processor is configured to run a program or an instruction, to implement the processes of the foregoing transmission method embodiment, and same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, the computer program/program product is executed by at least one processor to implement the processes of the foregoing transmission method embodiment, and same technical effect can be achieved. To avoid repetition, details are not described herein again.

An embodiment of this application further provides a transmission system. The transmission system includes: a terminal and a network side device. The terminal is configured to perform the processes in FIG. 3 and the foregoing method embodiments, the network side device is configured to perform the processes in FIG. 4 and the foregoing method embodiments, or the network side device is configured to perform the processes in FIG. 5 and the foregoing method embodiments; and same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and apparatus in the embodiments of this application is not limited to performing functions in the order shown or discussed, but may also include performing the functions in a basically simultaneous manner or in opposite order based on the functions involved. For example, the described method may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiments may be implemented by using a computer software product in addition to a necessary universal hardware platform, or certainly may be implemented by hardware. The computer software product is stored in a storage medium (for example, a ROM, a RAM, a magnetic disk, or an optical disc), and includes several instructions for instructing a terminal or a network side device to perform the method described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms of implementations without departing from the purpose of this application and the protection scope of the claims, all of the implementations fall within the protection of this application.

**Claims**

1. A transmission method, comprising:

   receiving, by a terminal, first information, wherein the first information is used to determine first wake-up signal WUS configuration information; and
   sending, by the terminal, a WUS to a first network side device based on the first information.

2. The method according to claim 1, wherein the receiving, by a terminal, first information comprises at least one of the following:

   detecting, by the terminal, a target synchronization signal block SSB on a target frequency, wherein the target SSB is used to determine the first WUS configuration information; or the target SSB comprises configuration information of a physical downlink control channel PDCCH, and the PDCCH is used to determine the first WUS configuration information, or the PDCCH is used to schedule system information used to determine the first WUS configuration information;
   detecting, by the terminal, a PDCCH based on configuration information of the PDCCH, wherein the PDCCH is used to determine the first WUS configuration information, or the PDCCH is used to schedule system information used to determine the first WUS configuration information;
   receiving, by the terminal, system information based on a PDCCH, wherein the system information is used to determine the first WUS configuration information; and
   receiving, by the terminal, the first information based on a second RAT when performing initial access to a first radio access technology RAT.

3. The method according to claim 2, wherein the target SSB comprises a first SSB or a second SSB, the first SSB is a first-type SSB, and the second SSB is a second-type SSB.

4. The method according to claim 3, wherein the target SSB comprises the first SSB, and the target frequency comprises at least one of the following:

   at least one first frequency, wherein the first frequency is a frequency or a synchronization raster that is protocol-predefined and that supports detection of the first-type SSB;
   a frequency indicated by a detected third SSB; and
   a frequency determined based on a frequency on which a third SSB is detected, wherein
   the third SSB is the first-type SSB.

5. The method according to claim 3, wherein the target SSB comprises the second SSB, and the target frequency comprises at least one of the following:

   at least one second frequency, wherein the second frequency is a frequency or a synchronization raster that is protocol-predefined and that supports detection of the second-type SSB;
   a frequency indicated by a detected fourth SSB; and
   a frequency determined based on a frequency on which a fourth SSB is detected, wherein

the fourth SSB is the second-type SSB.

6. The method according to any one of claims 1 to 5, wherein before or during the receiving, by a terminal, first information, the method further comprises:

   detecting, by the terminal, a fifth SSB on the at least one second frequency, wherein
   the fifth SSB is used by the terminal to perform initial access, the fifth SSB is the second-type SSB, and the second frequency is a frequency or a synchronization raster that is protocol-predefined and that supports detection of the second-type SSB.

7. The method according to claim 6, wherein the receiving, by a terminal, first information comprises:
   receiving, by the terminal, the first information in a case that the terminal detects no fifth SSB on the at least one second frequency or the detected fifth SSB does not meet an access condition.

8. The method according to claim 6 or 7, wherein a detection parameter of the terminal for the first-type SSB is different from a detection parameter of the terminal for the second-type SSB; and
   the detection parameter comprises at least one of the following: a period of an SSB, a time length of the SSB, a signal or channel content comprised in the SSB, and a quantity of candidate occasions of the SSB in one sending period.

9. The method according to any one of claims 6 to 8, wherein a position of the second frequency is orthogonal to a position of the first frequency.

10. The method according to any one of claims 6 to 9, wherein the fifth SSB comprises the configuration information of the PDCCH, and the PDCCH is used to determine the first WUS configuration information, or the PDCCH is used to schedule the system information used to determine the first WUS configuration information.

11. The method according to any one of claims 1 to 10, wherein the first WUS configuration information comprises one of the following:

    default WUS configuration information or protocol-predefined WUS configuration information;
    WUS configuration information related to the first information; and
    WUS configuration information indicated by an indicator field of the first information.

12. The method according to claim 11, wherein the first information is the target SSB; and
    the WUS configuration information related to the first information comprises one of the following:

    WUS configuration information related to a position of the target SSB;
    WUS configuration information related to a period of the target SSB;
    WUS configuration information related to a pattern of the target SSB;
    WUS configuration information related to a quantity of antenna ports corresponding to the target SSB;
    WUS configuration information related to at least one of a sequence of a primary synchronization signal PSS and a sequence of a secondary synchronization signal SSS of the target SSB; and
    WUS configuration information related to a frequency on which the target SSB is detected.

13. The method according to claim 11, wherein the first information is the target SSB; and
    the WUS configuration information indicated by the indicator field of the first information comprises one of the following:

    WUS configuration information indicated by an indicator field of the target SSB; and
    WUS configuration information indicated by an indicator field of a physical broadcast channel PBCH of the target SSB.

14. The method according to any one of claims 1 to 13, wherein after the sending, by the terminal, a WUS to a first network side device based on the first information, the method further comprises:

    detecting, by the terminal, a sixth SSB on a third frequency; and
    performing, by the terminal, initial access based on the sixth SSB.

15. The method according to claim 14, wherein the third frequency comprises at least one of the following:

a protocol-predefined frequency;
a frequency on which the first information is detected;
a frequency determined based on a frequency on which the first information is detected; and
a frequency indicated by the indicator field of the first information.

16. The method according to any one of claims 1 to 15, wherein the method further comprises:

determining, by the terminal based on target information, that the first network side device is in an energy saving state, wherein
the target information comprises at least one of the first information, second information, and third information;
the second information is an SSB detected by the terminal on at least one first frequency or information received based on a second RAT, and the first frequency is a frequency or a synchronization raster that is protocol-predefined and that supports detection of the first-type SSB; and
the third information is an SSB detected by the terminal on at least one second frequency, and the second frequency is a frequency or a synchronization raster that is protocol-predefined and that supports detection of the second-type SSB.

17. The method according to any one of claims 1 to 16, wherein the first WUS configuration information comprises at least one of the following: a WUS time-frequency resource, a WUS period, and an available WUS sequence.

18. A transmission method, comprising:
sending, by a second network side device, first information, wherein the first information is used to determine first wake-up signal WUS configuration information.

19. The method according to claim 18, wherein the sending, by a second network side device, first information comprises:

sending, by the second network side device, a target synchronization signal block SSB on a target frequency, wherein the target SSB is used to determine the first WUS configuration information; or the target SSB comprises configuration information of a physical downlink control channel PDCCH, and the PDCCH is used to determine the first WUS configuration information, or the PDCCH is used to schedule system information used to determine the first WUS configuration information;
sending, by the second network side device, a PDCCH based on configuration information of the PDCCH, wherein the PDCCH is used to determine the first WUS configuration information, or the PDCCH is used to schedule system information used to determine the first WUS configuration information;
sending, by the second network side device, system information based on a PDCCH, wherein the system information is used to determine the first WUS configuration information; and
sending, by the second network side device, the first information based on a second radio access technology RAT.

20. The method according to claim 19, wherein the target SSB comprises a first SSB or a second SSB, the first SSB is a first-type SSB, and the second SSB is a second-type SSB.

21. The method according to claim 20, wherein the target SSB comprises the first SSB, the target frequency comprises at least one first frequency, and the first frequency is a frequency or a synchronization raster that is protocol-predefined and that supports detection of the first-type SSB.

22. The method according to claim 20, wherein the target SSB comprises the second SSB, the target frequency comprises at least one second frequency, and the second frequency is a frequency or a synchronization raster that is protocol-predefined and that supports detection of the second-type SSB.

23. The method according to claim 20, wherein a sending parameter of the second network side device for the first-type SSB is different from a sending parameter of the second network side device for the second-type SSB; and
the sending parameter comprises at least one of the following: a period of an SSB, a time length of the SSB, a signal or channel content comprised in the SSB, and a quantity of candidate occasions of the SSB in one sending period.

24. The method according to claim 21 or 22, wherein a position of the second frequency is orthogonal to a position of the first frequency.

25. The method according to any one of claims 18 to 24, wherein the first WUS configuration information comprises at least one of the following: a WUS time-frequency resource, a WUS period, and an available WUS sequence.

26. A transmission method, comprising:

receiving, by a first network side device, a wake-up signal WUS from a terminal; and
switching, by the first network side device, from being in an energy saving state to being in a non-energy saving state based on the WUS.

27. A transmission apparatus, comprising:

a first receiving module, configured to receive first information, wherein the first information is used to determine first wake-up signal WUS configuration information; and
a first sending module, configured to send a WUS to a first network side device based on the first information.

28. A transmission apparatus, comprising:
a second sending module, configured to send first information, wherein the first information is used to determine first wake-up signal WUS configuration information.

29. A transmission apparatus, comprising:

a second receiving module, configured to receive a wake-up signal WUS from a terminal; and
a switching module, configured to switch from being in an energy saving state to being in a non-energy saving state based on the WUS.

30. A terminal, comprising a processor and a memory, wherein the memory stores a program or an instruction that is executable on the processor; and when the program or the instruction is executed by the processor, the steps of the transmission method according to any one of claims 1 to 17 are implemented.

31. A network side device, comprising a processor and a memory, wherein the memory stores a program or an instruction that is executable on the processor; and when the program or the instruction is executed by the processor, the steps of the transmission method according to any one of claims 18 to 25 are implemented, or the steps of the transmission method according to claim 26 are implemented.

32. A readable storage medium, wherein the readable storage medium stores a program or an instruction; and when the program or instruction is executed by a processor, the steps of the transmission method according to any one of claims 1 to 17 are implemented, or the steps of the transmission method according to any one of claims 18 to 25 are implemented, or the steps of the transmission method according to claim 26 are implemented.

FIG. 1

FIG. 2

| | |
|---|---|
| A terminal receives first information, where the first information is used to determine first WUS configuration information | 301 |

| | |
|---|---|
| The terminal sends a WUS to a first network side device based on the first information | 302 |

FIG. 3

| | |
|---|---|
| A second network side device sends first information, where the first information is used to determine first WUS configuration information | 401 |

FIG. 4

| | |
|---|---|
| A first network side device receives a wake-up signal WUS from a terminal | 501 |

| | |
|---|---|
| The first network side device switches from being in an energy saving state to being in a non-energy saving state based on the WUS | 502 |

FIG. 5

600

Transmission apparatus

First receiving module — 601

First sending module — 602

FIG. 6

700

Transmission apparatus

Second sending module — 701

FIG. 7

800

Transmission apparatus

Second receiving module — 801

Switching module — 802

FIG. 8

900

Communication device

901 — Processor ⟺ Memory — 902

FIG. 9

FIG. 10

FIG. 11

## INTERNATIONAL SEARCH REPORT

| International application No. |
| --- |
| **PCT/CN2024/090251** |

| A. | CLASSIFICATION OF SUBJECT MATTER |
| --- | --- |

H04W 52/02(2009.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT, ENTXTC, DWPI, CNKI, VEN, ENTXT, 3GPP: 唤醒, 能量节省, 配置, 同步信号块, 终端, 网络设备, 基站, wake-up, WUS, power saving, configuration, SSB, synchronous signal block, UE, gNB, BS, eNB

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2023007581 A1 (QUALCOMM INC.) 05 January 2023 (2023-01-05) description, paragraphs [0005]-[0163] | 1-32 |
| X | CN 102421172 A (ALCATEL-LUCENT SHANGHAI BELL CO., LTD.) 18 April 2012 (2012-04-18) description, paragraphs [0010]-[0076] | 1-32 |
| A | CN 105165062 A (DONGGUAN YULONG COMMUNICATION TECHNOLOGY CO., LTD.; YULONG COMPUTER TELECOMMUNICATION SCIENTIFIC (SHENZHEN) CO., LTD.) 16 December 2015 (2015-12-16) entire document | 1-32 |
| A | CN 114026902 A (BEIJING XIAOMI MOBILE SOFTWARE CO., LTD.) 08 February 2022 (2022-02-08) entire document | 1-32 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 July 2024** | **16 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/090251**

| Patent document cited in search report | | | Publication date (day/month/year) | Patent family member(s) | | | Publication date (day/month/year) |
|---|---|---|---|---|---|---|---|
| US | 2023007581 | A1 | 05 January 2023 | WO | 2023278936 | A1 | 05 January 2023 |
| | | | | EP | 4364474 | A1 | 08 May 2024 |
| CN | 102421172 | A | 18 April 2012 | KR | 20130069827 | A | 26 June 2013 |
| | | | | WO | 2012042375 | A2 | 05 April 2012 |
| | | | | WO | 2012042375 | A3 | 12 July 2012 |
| | | | | JP | 2013540392 | A | 31 October 2013 |
| | | | | JP | 5579328 | B2 | 27 August 2014 |
| | | | | EP | 2622936 | A2 | 07 August 2013 |
| | | | | US | 2013189932 | A1 | 25 July 2013 |
| CN | 105165062 | A | 16 December 2015 | WO | 2015018042 | A1 | 12 February 2015 |
| | | | | EP | 3032880 | A1 | 15 June 2016 |
| | | | | EP | 3032880 | A4 | 08 March 2017 |
| | | | | EP | 3032880 | B1 | 20 March 2019 |
| | | | | US | 2016135195 | A1 | 12 May 2016 |
| | | | | US | 9794947 | B2 | 17 October 2017 |
| CN | 114026902 | A | 08 February 2022 | | None | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310479714